# EUROPÄISCHE PATENTSCHRIFT

(11) **EP 2 629 100 B1**
(45) Veröffentlichungstag und Bekanntmachung des Hinweises auf die Patenterteilung: **14.09.2016**
(21) Anmeldenummer: 12155637.7
(22) Anmeldetag: 15.02.2012
(51) Int. Cl.: B65G 49/00, B65G 17/32, G01N 35/04

(54) **Fördersystem für Materialproben, insbesondere medizinische Proben**
Conveying system for material samples, in particular medical samples
Système de transport pour échantillons de matériau, notamment échantillons médicaux

(43) Veröffentlichungstag der Anmeldung: 21.08.2013
(73) Patentinhaber: GLP systems GmbH, 21079 Hamburg (DE)
(72) Erfinder: Hecht Robert, 82418 Seehausen (DE)
(74) Vertreter: Raffay & Fleck

(56) Entgegenhaltungen:
- US-A1- 2002 146 347
- US-A1- 2010 123 551
- US-A1- 2010 239 461

## Beschreibung

Die Erfindung betrifft ein Fördersystem für Materialproben, insbesondere medizinische Proben gemäß dem Oberbegriff des Patentanspruchs 1.

Im Bereich der Analyse von Materialproben gilt es häufig eine große Zahl von Proben in vergleichsweise kurzen Zeiträumen zu analysieren und durchzusetzen. Dies gilt insbesondere im Bereich medizinischer Proben, wie etwa Proben von Körperflüssigkeiten, die in medizinischen Analyselabors mit hohem Automatisierungsgrad untersucht werden. Das Labor erhält für die Untersuchung einer einzelnen Probe vergleichsweise geringe Abrechnungsbeiträge, weshalb bereits aus Kosteneffizienzgründen und allgemeinen Gründen der Wirtschaftlichkeit in diesem Bereich eine in hohem Maße automatisierte Behandlung und Bearbeitung der medizinischen Proben erforderlich ist und auch heute schon durchgeführt wird.

Dabei ist es üblich, dass einzelne Proben in einem Laborsystem entlang einer Förderbahn transportiert und zu den jeweils für ihre Bearbeitung vorgesehenen, an der Förderbahn angeordneten Analysegeräten verbracht werden. Dabei sind die einzelnen in der Förderbahn befindlichen und auf entlang der Förderbahn bewegbaren Probenhaltern angeordneten medizinischen Proben durchaus unterschiedlichen Analysen zu unterziehen, sei es nur einer einzigen solchen Analyse oder ggf. sogar aufeinanderfolgend unterschiedlicher Untersuchungen. Denkbare Analysen in jeweils unterschiedlichen Analysegeräten können z.B. bei einer Blutprobe die Untersuchung des Hämoglobinwertes (HB-Wertes), eines Cholesteringehaltes, des Gehaltes an Harnsäure oder anderer medizinisch relevanter Parameter sein. Urinproben können beispielsweise auf ihren pH-Wert, den Gehalt an roten Blutkörperchen oder einen allgemeinen Eiweißgehalt untersucht werden.

Für eine entsprechende Förderung der mit Proben haltenden Probengefäßen bestückten Probenhalter sind bereits seit langem Fördersysteme bekannt, die Förderbahnen und darin zu transportierende Probenhalter aufweisen. So gibt es derartige Systeme mit "passiven" Probenhaltern, die ohne eigene Antriebsmöglichkeiten mit Hilfe von in der Förderbahn angeordneten Fördereinrichtungen, wie insbesondere Förderbändern oder -riemen, in der Förderbahn bewegt werden. Beispiele für solche Lösungen sind in der DE 44 34 714 A1 und EP 2 074 431 B1 offenbart.

Bei derartigen Fördersystemen, bei denen die Antriebstechnik in den Förderbahnen angeordnet ist, besteht jedoch das Problem, dass bei einem Ausfall des Antriebes in der Regel die gesamt Laboranlage still steht und bis zur erfolgreichen Wartung oder Reparatur der Förderbahn und ihres Antriebssystems nicht genutzt werden kann. Ein solcher Stillstand des gesamten Labors bedeutet nicht zuletzt aufgrund der für die Wirtschaftlichkeit des Laborbetriebes einzuhaltenden hohen Durchsatzraten einen erheblichen wirtschaftlichen Schaden.

Diesen Schaden zu vermeiden, helfen alternative Gestaltungsmöglichkeiten, bei denen die Antriebstechnik nicht in der Förderbahn selbst befindlich ist, sondern vielmehr in den Probenhaltern, die selbstfahrend ausgebildet sind. Ein Beispiel für solch eine Lösung eines Fördersystems ist in der US 6,429,016 B1 gezeigt. Dort sind selbstfahrende Probenhalter-Roboter offenbart, die über lenkbare Räder gesteuert entlang von Förderstrecken in der Förderbahn verbracht werden können zu einem jeweiligen Bestimmungsort. Die dort gezeigten Probenhalter-Roboter sind jeweils für die Aufnahme einer Vielzahl von Probengefäßen ausgebildet. Den Robotern wird eine Reihe von Instruktionen, was sie mit den auf ihnen angeordneten Proben zu unternehmen, bzw. wohin sie diese zu verbringen haben, in eine bordeigene Steuerung programmiert. Anschließend fahren die Roboter selbständig entlang der Strecke, wobei sie ihre Fahrt anhand von bordeigenen Mitteln überwachen und steuern.

Ein weiteres Beispiel für ein Fördersystem mit in einer Förderbahn entlang einer Förderstrecke selbstständig verfahrenden Probenhaltern ist in der US 2005/0271555 A1 offenbart. Dort sind Probenhalter gezeigt, die von einer zentralen Steuerung per drahtloser Kommunikation gesteuert verfahren können. Dabei sind in der Bahn Sensoren angeordnet, die das Nahen eines Probenhalters erfassen und ggf. die auf dem Probenhalter angeordnete Probe identifizieren können. Die in der US 2005/0271555 A1 offenbarten Probenhalter sind jeweils zur Aufnahme eines einzigen, röhrchenförmigen Probengefäßes ausgebildet. Wenngleich mit den in den zuletzt genannten Druckschriften US 6,429,016 B1 und US 2005/0271555 A1 offenbarten Fördersystemen durch die Verlagerung des Antriebes in die Probenhalter selbst das Problem einer langen Ausfallzeit des gesamten Fördersystems und mithin einer Laboranlage bei einem Defekt des Antriebes überwunden werden kann - hier kann stattdessen einfach ein Probenhalter mit defektem Antrieb entnommen und durch einen Probenhalter mit funktionierendem Antrieb ersetzt werden, bestehen bei den zuvor beschriebenen Systemen nach wie vor Nachteile und Mängel, die zu überwinden sich die Erfindung zur Aufgabe gemacht hat:
So sind die in der US 6,429,016 B1 gezeigten selbstfahrenden Probenhalter hinsichtlich ihrer Steuerung sehr komplex aufgebaut. Sie besitzen die gesamte "Intelligenz", die zum sicheren Abfahren von Transportrouten auf der Bahn erforderlich ist. Dieser komplexe Aufbau macht die einzelnen Probenhalter, von denen in einem Laborbetrieb eine große Vielzahl einzusetzen sind, kostspielig in der Anschaffung. Bei einem Ausfall dieser "Intelligenz" an Bord nur eines einzigen in der Bahn befindlichen Roboters kann es zu erheblichen Störungen kommen. Eine Überwachung aller Roboter auf ihre jeweilige Steuerung und deren Funktionalität ist sehr kompliziert und aufwendig in der Umsetzung.

US2010/0239461 beschreibt selbstfahrende Probenhalter mit einem Antrieb und einer Energieversorgung. Die Fahrdaten dieser Probenhalter werden von einer zentralen Steuereinheit an diese übermittelt.

US2002/0146347 und US2010/0123551 beschreiben Probenhalter in einem automatischen Analysesystem bei welchem die Positionsdaten der Probenhalter mittels Nahfeld-Übermittlungstechnik erfasst werden. Bei dieser Nahfeld-Übermittlungstechnik werden jedoch nur Positionsdaten vom Probenhalter übertragen und keine Fahrbefehle an den Probenhalter.

Bei den in der US 2005/0271555 A1 gezeigten selbstfahrenden Probenhaltern ist der steuerungstechnische Aufbau der Probenhalter zwar verglichen mit den aus der zuvor genannten Druckschrift US 6,429,016 B1 bekannten deutlich einfacher und mithin der einzelne Probenhalter kostengünstiger herzustellen und robuster, jedoch ergeben sich auch hier Probleme. Insbesondere erfolgt eine Kommunikation mit einer zentralen Steuerung, also einer einzigen Kommunikationsgegenstelle drahtlos. Dies bedingt, dass bei einer Vielzahl von Probenhaltern in dem System eine entsprechende Vielzahl von Kommunikationskanälen bereitzustellen ist, zur sicheren und individuellen Übermittlung von Daten und Befehlen zu den Probenhaltern und von den Probenhaltern zu der zentralen Steuerung.

Hier Abhilfe zu schaffen ist, wie bereits erwähnt, Aufgabe der vorliegenden Erfindung. Mit der Erfindung soll also ein Fördersystem für Materialproben, insbesondere medizinische Proben gemäß dem vorbekannten Stand der Technik mit selbstfahrenden Probenhaltern dahingehend weitergebildet werden, dass bei einem einfachen Aufbau der Probenhalter eine effiziente und schnell reagierende Steuerung der Fahrbewegungen der Probenhalter möglich ist.

Diese Aufgabe wird gelöst durch ein Fördersystem für Materialproben, insbesondere medizinische Proben, mit den Merkmalen des Patentanspruchs 1. In einem weiteren Aspekt besteht eine Lösung der Aufgabe in einem Verfahren zum Betreiben eines Fördersystems für Materialproben mit den Merkmalen des Anspruchs 13. Vorteilhafte Weiterbildungen eines erfindungsgemäßen Fördersystems sind in den abhängigen Ansprüchen 2 bis 12 angegeben.

Erfindungsgemäß weist ein Fördersystem für Materialproben, insbesondere medizinische Proben, eine wenigstens eine Förderstrecke ausbildende Förderbahn und eine Vielzahl von entlang der Förderstrecke verbringbaren Probenhaltern auf. Diese Probenhalter sind selbstfahrend mit einstellbaren Fahrparametern. Sie sind ferner jeweils zur Aufnahme eines Probengefäßes ausgebildet. Für die Eigenschaft des Selbstfahrens weisen die Probenhalter jeweils einen Antriebsmotor, einen Energiespeicher zum Versorgen des Antriebsmotors mit Antriebsenergie und wenigstens ein von Antriebsmotor antreibbares Friktionsrad zum Übertragen einer Antriebskraft auf die Förderbahn auf. Ferner weist das Fördersystem für Materialproben gemäß der Erfindung eine Steuerung zum Steuern der Fahrten der selbstfahrenden Probenhalter auf. Das Besondere und die Erfindung ausmachende des erfindungsgemäßen Fördersystems liegt darin begründet, dass entlang der Förderstrecke an vorbestimmten Positionen in der Förderbahn Signalübertragungsmittel angeordnet sind und dass in den Probenhaltern Signalempfangsmittel vorgesehen sind. Dabei sind die Signalübertragungsmittel zur Ausbildung einer Nahfeldübermittlungsstrecke mit den Signalempfangsmitteln eingerichtet und mit der Steuerung verbunden. Die Signalübertragungsmittel sind dabei zur Übermittlung von die Einstellung der Fahrparameter betreffenden Steuerdaten über die Nahfeldübermittlungsstrecke an die selbstfahrenden Probenhalter eingerichtet.

Durch die erfindungsgemäße Ausgestaltung und Umsetzung der Übermittlung von Steuerparametern bzw. Steuerdaten an die selbstfahrenden Probenhalter kann zweierlei erreicht werden:

Zunächst ist es nicht erforderlich, die Probenhalter, welche selbstfahrend ausgebildet sind, mit einer hoch komplexen eigenen Steuerung und entsprechender Sensorik auszugestalten, die dort eigenständig entsprechende Steuerprozesse anhand von festgestellten Randbedingungen generiert. Die Probenhalter können mit anderen Worten hinsichtlich ihrer "Intelligenz" vergleichsweise einfach und mithin kostengünstig gestaltet werden.

Zum anderen erlaubt die erfindungsgmäße Anordnung von Signalübermittlungsmitteln zur Nahfeldübermittlung an die Probenhalter entlang der Förderstrecke in der Förderbahn eine Übermittlung von Steuerdaten, die die Einstellung der Parameter betreffen, über einen einzigen Kommunikationskanal mit dem jeweiligen Signalübermittlungsmittel. Anders als in dem Stand der Technik gemäß der US 2005/0271555 A1 vorgegeben, erfolgt eine Übermittlung von Steuerbefehlen bzw. Steuerdaten beinhaltenden Signalen nicht mehr zentral von einem einzigen drahtlosen Sender an die diversen Probenhalter, was eine Unterscheidung nach Kommunikationskanälen, beispielsweise über eine jedem Steuerbefehl vorgeschaltete, individuelle Kennung oder aber über unterschiedliche Frequenzen oder dgl. erfordert. Vielmehr erfolgt die Übermittlung von Steuerdaten bzw. Steuerbefehlen entlang der Nahfeldkommunikation mittels der Signalübermittlungsmittel in der Förderbahn nur zu denjenigen Probenhaltern, die mit ihren Signalempfangsmitteln in Reichweite der Nahfeldübermittlung sind. Zudem ist die Kenntnis der Position eines Probenhalters für die Steuerung zur Abgabe bestimmter Steuerdaten bzw. Steuerbefehle betreffend die Farbparameter nicht mehr erforderlich. So kann z.B. ein Steuerbefehl, der eine erforderliche Reduzierung der Fahrgeschwindigkeit vor einer Kurve betrifft, durch ein entsprechend vor der Kurve angeordnetes Signalübertragungsmittel jedem Probenhalter übermittelt werden, der dieses Signalübertragungsmittel passiert, ohne dass die Position des Probenhalters in der zentralen Steuerung exakt bekannt sein muss oder aber Informationen zu seiner individuellen Zuweisung bzw. Kennung vorliegen müssen. Selbstverständlich können den Signalübertragungsmitteln von der Steuerung auch spezifische Vorgaben hinsichtlich der Übermittlung von Steuerdaten gemacht werden, beispielsweise wenn in einem Streckenabschnitt ein Rückstau aufgrund einer verzögerten Weiterbearbeitung der auf den Probenhaltern befindlichen Proben aufgetreten ist.

Die dezentrale Übermittlung von die Fahrparameter betreffenden Steuerdaten über die entlang der Förderstrecke angeordneten Signalübermittlungsmittel gibt insgesamt ein hohes Maß an Flexibilität im Hinblick auf den Aufbau der Steuerung und erlaubt, diese Steuerung mit vergleichsweise einfachen Mitteln und störungsunanfällig zu bilden.

Ein besonderes Beispiel für mit den Signalübertragungsmitteln übermittelte Steuerdaten sind solche Steuerdaten, die die einzustellende Fahrgeschwindigkeit betreffen. Insbesondere die Fahrgeschwindigkeit wird bei einem erfindungsgemäßen System variabel sein, so können beispielsweise von weiteren Probenhaltern freie, geraden Abschnitte vergleichsweise zügig bzw. schnell durchfahren werden, wohingegen vor Kurven die Fahrgeschwindigkeit reduziert werden muss, um die auftretenden Fliehkräfte zu reduzieren und damit die Gefahr eines möglichen Umkippens eines Probenhalters bzw. des Verlierens von in auf dem Probenhalter befindlichen Probengefäßen enthaltenen Materialproben, insbesondere wenn diese flüssiger Form sind (z.B. Urin oder Blut).

Geschwindigkeitsreduzierungen müssen die selbstfahrenden Probenhalter typischerweise auch im Bereich von Weichen, in denen sich die Förderstrecken aufteilen, vornehmen, zumindest dann, wenn sie im Bereich einer solchen Weiche eine geradeaus führende Fahrstrecke verlassen und auf einen Nebenzweig gelenkt werden.

Steuerdaten hinsichtlich einer von dem Probenhalter einzustellenden Fahrgeschwindigkeit (zu denen zählen auch solche, die die Einstellung einer Geschwindigkeit von "0" bedingen, also ein Stoppsignal) sind aber nicht die einzigen Steuerdaten hinsichtlich Fahrparameter, die übertragen werden können. Hier können sich beispielsweise auch Parameter im Hinblick auf Fahrtrichtungen ergeben, sofern die Probenhalter selbstlenkend ausgebildet sind oder aber Steuerdaten im Hinblick auf die Schaltung von Sensoren zur Überwachung der Fahrt abhängig von einer Position entlang der Förderstrecke.

Eine Möglichkeit, eine Nahfeldübermittlungsstrecke auszubilden, besteht in einer Lichtstrecke, wobei dazu ein Laser bzw. eine LED als Signalübertragungsmittel und ein entsprechender Lichtsensor als Signalempfangsmittel gewählt werden. Diese Lichtstrecke ist nicht zwangsläufig eine solche im sichtbaren Bereich, sie kann ebenso gut im Bereich des Infrarots oder aber auch im UV-Bereich liegen, wobei insbesondere Infrarotlichtstrecken bevorzugt sind. Die Übermittlung von Steuerdaten entlang einer solchen Übermittlungsstrecke kann insbesondere durch gepulste Lichtblitze erfolgen, deren jeweilige Länge und zeitliche Abfolge entsprechende Signale codiert. Sie kann aber auch codiert in variablen Wellenlängen des übermittelten Lichts erfolgen. Über eine solche Lichtstrecke können beispielsweise Vorgaben hinsichtlich einer einzustellenden Fahrgeschwindigkeit an den Probenhalter übertragen werden, aber auch Befehle hinsichtlich der Aktivierung oder Deaktivierung von Sensoren oder dgl.

Alternativ oder auch zusätzlich kann eine Datenübermittlungsstrecke mit HF-RFID-Elementen, insbesondere solche nach dem NFC-Standard, als Nahfeldübermittlungsstrecke gebildet sein. Auch über einen solchen Weg lassen sich entsprechende Daten aus der Bahn an einen diese überfahrenden Probenhalter übermitteln. Mit Hilfe derartiger Elemente kann eine Datenübermittlung auch einfach in umgekehrter Richtung erfolgen, wozu bei einer Lichtsstrecke als Nahfeldübermittlungsstrecke eine zusätzliche umgekehrte Anordnung von LED bzw. Laser auf dem Probenhalter und einem entsprechenden optischen Empfänger in der Bahn erforderlich ist. Über eine solche NFC-Übermittlungsstrecke können somit auch Daten aus dem Probenhalter an bestimmten Positionen der Förderbahn ausgelesen werden, beispielsweise im Vorwege einer Weiche, um anhand der zentralen Steuerung abzugleichen, ob die Weiche für eine Überführung des aktuell sich nähernden Probenhalters in einen Abzweig geschaltet werden muss oder aber dieser entlang der Hauptrichtung weiter passieren soll. Auch können über eine entsprechende Übermittlungsstrecke Daten von dem Probenhalter in Richtung der zentralen Steuerung übermittel werden, beispielsweise solche betreffend einen Ladezustand des Energiespeichers, hinsichtlich sonstiger Warnungen oder dgl., damit die Steuerung entsprechend reagieren und einen mit Problemen behafteten Probenhalter bei nächster Gelegenheit zur Aussortierung geben kann.

Neben den Signalübertragungsmitteln können in der Bahn ferner auch Probenhalter-Erkennungssensoren zum Feststellen eines im Erkennungsbereich eines solchen befindlichen Probenhalters angeordnet sein. Solche können beispielsweise im Bereich eines Abzweiges hinter einer Weiche angeordnet werden, um festzustellen, dass ein Probenhalter die Weiche passiert hat, diese mithin wieder in ihre Normalstellung geschaltet werden kann. Ein Beispiel für einen solchen Sensor kann ein Hall-Sensor oder ein Reed-Schalter sein, der durch einen entsprechend an dem Probenhalter an geeigneter Position angeordneten Permanentmagneten beschaltet wird.

Mit Vorteil ist die Förderbahn aus auf einer Basis angeordneten, mit der Basis lösbar verbundenen modularen Bahnelementen gebildet, wobei diese modularen Bahnelemente Förderstreckenstrukturen und ggf. elektronische Komponenten mit Signalübertragungsmitteln und/oder Sensoren sowie zugehöriger Ansteuerelektronik aufweisen. Ein derartiger modularer Aufbau gestattet einerseits einen einfachen Austausch defekter Bahnelemente gegen intakte neue solche Elemente, wobei für den Austausch lediglich das defekte Bahnelement von der Basis zu lösen, seine elektronischen Komponenten, sofern vorhanden, hinsichtlich einer Versorgung und Datenanbindung an die zentrale Steuerung abzukappen sind, beispielsweise durch Lösen entsprechender Steckverbindungen, im Anschluss das neue Bahnelement zunächst an die Versorgung und Datenverbindung durch beispielsweise Anstecken der Steckverbindungen, anzubinden ist und danach in die Förderbahn lösbar eingesetzt wird. Darüber hinaus ist es möglich, mittels einer modularen Bauweise mit den modularen Bahnelementen eine Förderbahn hinsichtlich möglicher Förderstrecken umzugestalten, beispielsweise um diese zu erweitern durch weitere Förderstrecken, die z.B. zu neu aufgestellten Analysegeräten führen oder dgl. Dabei weisen die modularen Bahnelemente mit Vorteil Rastmittel auf, mittels derer sie lösbar auf der Basis verrasten, insbesondere auf diese aufklipsbar sind. Die Basis kann dabei z.B. ein Metallrahmen oder eine insbesondere mit Öffnungen durchbrochene Metallplatte sein, der tischartig auf Beinen oder einem Gestell oder dgl. ruht, die Bahnelemente können beispielsweise aus Kunststoff gebildet sein, besonders einfach aus spritzgegossenem Kunststoff, wobei entsprechende elektronische Komponenten an diesem befestigt sind, z.B. entsprechend in Rastaufnahmen gehalten, geklebt oder geschraubt oder dgl.

Gemäß einer weiteren vorteilhaften Weiterbildung der Erfindung weisen die Probenhalter Kollisionswarnsensoren auf, die mit dem Antriebsmotor in einer Weise verbunden sind, dass sie diesen bei einem festgestellten Hindernis stoppen bzw. auskuppeln. Derartige Kollisionswarnsensoren sind für das erfindungsgemäße Fördersystem eine redundante Absicherung, so dass für den Fall einer Annäherung an einen in einem Bahnabschnitt außerplanmäßig angehaltenen weiteren Probenhalter der auffahrende Probenhalter rechtzeitig anhält, ohne dass es hier zu einer Kollision kommt. Üblicherweise sollten derartige Kollisionen schon deshalb nicht vorkommen können, da die in der Förderbahn angeordneten Signalübertragungsmittel die Bewegungsabläufe der Probenhalter hinsichtlich der einzustellenden Geschwindigkeiten und sonstiger Farbparameter steuern. Falls jedoch aus welchem Grund auch immer die Steuerung die entsprechenden Steuerdaten nicht über die Signalübertragungsmittel an die Probenhalter weitergeben kann, so erfolgt aufgrund der Kollisionswarnsensoren dennoch eine Absicherung zur Kollisionsvermeidung. Insbesondere weisen entsprechende Kollisionswarnsensoren mit ihrem Sensorbereich nach vorn, also in Fahrtrichtung der Probenhalter. Weitere Kollisionswarnsensoren können jedoch auch so angeordnet sein, dass sie einen seitlichen Bereich mit erfassen, insbesondere um im Bereich von Weichen eine Kollision bei einer Streckenzusammenführung zu vermeiden. Um zu verhindern, dass diese mit ihrem Sensorbereich einen seitlichen Abschnitt mit abdeckenden Kollisionswarnsensoren anschlagen, sollte in einem Abschnitt der Förderbahn, in dem die Förderstreckenführung eng beieinander zwei gegenläufig befahrene Förderstrecken aufweist und sich in diesem Abschnitt zwei einander ohne Kollisionsgefahr nah aneinander vorbeifahrende Wagen begegnen können, insbesondere diese den seitlichen Bereich abdeckenden Kollisionswarnsensoren, können aber auch weitere der Kollisionswarnsensoren gezielt aktiviert bzw. deaktiviert werden. Entsprechende Signale werden mit Vorteil über die Signalübertragungsmittel an die entsprechenden Signalempfänger gegeben. So können beispielsweise die seitlich einen Sensorbereich erfassenden Kollisionswarnsensoren explizit nur vor Zufahrt auf eine Weiche und dort nur zu derjenigen Seite, von der sich ein weiterer Strang einer Förderstrecke nähert und mit dem ankommenden Zweig zusammengeführt wird, aktiviert und nach Weichendurchfahrt wieder deaktiviert werden. Diese Aktivierung und Deaktivierung erfolgt erfindungsgemäß über eine Nahfeldübermittlungsstrecke wie bereits beschrieben.

Bei dem erfindungsgemäßen Fördersystem sind mit Vorteil die Förderstrecken in der Förderbahn durch quer zur Oberfläche der Förderbahn verlaufende Führungsnuten vorgegeben, und die Probenhalter weisen auf ihren Unterseiten jeweils einen Führungsstift auf zum Eingreifen in die Führungsnuten. Dadurch erfolgt die Führung und mithin Lenkung der selbstfahrenden Probenhalter durch die seitliche Führung des Führungsstiftes in den Führungsnuten. Insbesondere bedarf es dann keiner eigenen Lenkbarkeit des Probenhalters bzw. der Probenhalter, was zu einer Vereinfachung der Bauweise und mithin einer kostenmäßigen Aufwandsreduzierung bei der Herstellung der Probenhalter führt.

Ein Verfahren zum Betreiben eines Fördersystems für Materialproben, insbesondere medizinische Proben, welches Fördersystem eine wenigstens eine Förderstrecke ausbildende Förderbahn und eine Vielzahl von entlang der Förderstrecke verbringbaren, mit einstellbaren Fahrparametern selbstfahrenden, jeweils zur Aufnahme eines Probengefäßes ausgebildeten Probenhaltern sowie eine Steuerung zum Steuern der Fahrten der selbstfahrenden Probenhalter aufweist, zeichnet sich erfindungsgemäß dadurch aus, dass den selbstfahrenden Probenhaltern mittels entlang der Förderstrecke an vorbestimmten Positionen in der Förderbahn angeordneter Signalübertragungsmittel die zur Ausbildung einer Nahfeldübermittlungsstrecke mit in den Probenhaltern angeordneten Signalempfangsmitteln eingerichtet und mit der Steuerung verbunden sind, die Einstellung der Fahrparameter betreffende Steuerdaten über die Nahfeldübermittlungsstrecke übermittelt werden.

Weitere Vorteile und Merkmale des erfindungsgemäßen Fördersystems für Materialproben ergeben sich aus der nachfolgenden Beschreibung eines Ausführungsbeispiels anhand der beigefügten Figuren. Dabei zeigen:
- Fig. 1: eine schematische perspektivische Aufsicht auf eine Förderbahn mit darin befindlichen selbstfahrenden Probenträgern als wesentliche Bestandteile eines möglichen Ausführungsbeispiels für ein erfindungsgemäßes Fördersystem;
- Fig. 2: eine perspektivische Ansicht eines Basiselementes mit darauf angeordneten Bahnelementen zur Bildung eines Teils der Förderbahn gemäß einem Ausführungsbeispiel der Erfindung;
- Fig. 3: eine perspektivische Ansicht eines Bahnelementes mit darin angeordneter Weiche;
- Fig. 4: eine Aufsicht auf ein weiteres Bahnelement mit darin angeordneter Weiche und den in dem Bahnelement angeordneten diversen Sensoren bzw. Signalübertragungsmitteln;
- Fig. 5: eine Seitenansicht von einem Abschnitt einer Förderbahn mit darin angeordnetem selbstfahrenden Probenhalter;
- Fig. 6: eine perspektivische Ansicht eines selbstfahrenden Probenhalters des erfindungsgemäßen Fördersystems;
- Fig. 7: eine Ansicht des Probenhalters gemäß Fig. 6 von vorn;
- Fig. 8: eine Ansicht des Probenhalters gemäß Fig. 6 von unten; und
- Fig. 9: eine Längsschnittdarstellung des Probenhalters aus Fig. 6.

In den beigefügten Figuren ist in unterschiedlichen Darstellungen ein Ausführungsbeispiel eines erfindungsgemäßen Fördersystems veranschaulicht bzw. sind mögliche Ausführungsformen der in diesem System vorhandenen relevanten Komponenten dargestellt. Die Figuren sind dabei keinesfalls maßstabsgerecht und zeigen nicht notwendigerweise alle Details. Sie dienen vielmehr der Veranschaulichung und nachstehenden Erläuterung der wesentlichen Elemente und Merkmale der Erfindung anhand des aufgezeigten Ausführungsbeispiels.

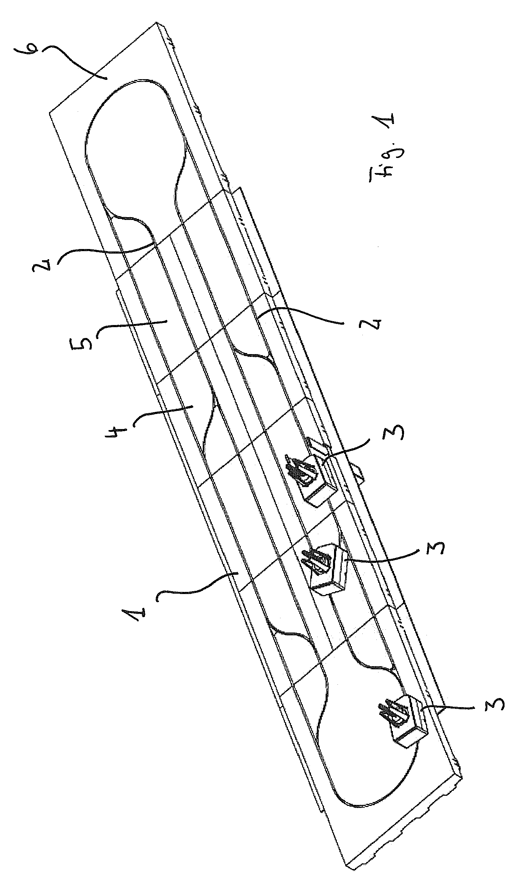

In Fig. 1 ist eine Förderbahn 1 eines erfindungsgemäßen Fördersystems in einem möglichen Ausführungsbeispiel gezeigt, wobei in der Oberfläche der Förderbahn Führungsnuten 2 ausgebildet sind, die Förderstrecken definieren. Diese Führungsnuten 2 bilden unterschiedliche Abschnitte von Förderstrecken, sind insbesondere durch Weichen und Abzweige untereinander verbunden, so dass durch Schaltung der Weichen unterschiedliche Förderstrecken zusammengestellt werden können. Auf der Führungsbahn 1 sind entlang der Förderstrecken orientiert selbstfahrende Probenhalter 3, hier drei derartige Probenhalter 3, angeordnet. Die Förderbahn ist aufgebaut aus verschiedenen Bahnelementen, beispielsweise einem Bahnelement 4 mit einer Weiche, einem Bahnelement 5 mit geradlinig verlaufenden Führungsnuten und einem Bahnelement 6 mit Weichen sowie einem Wende U.

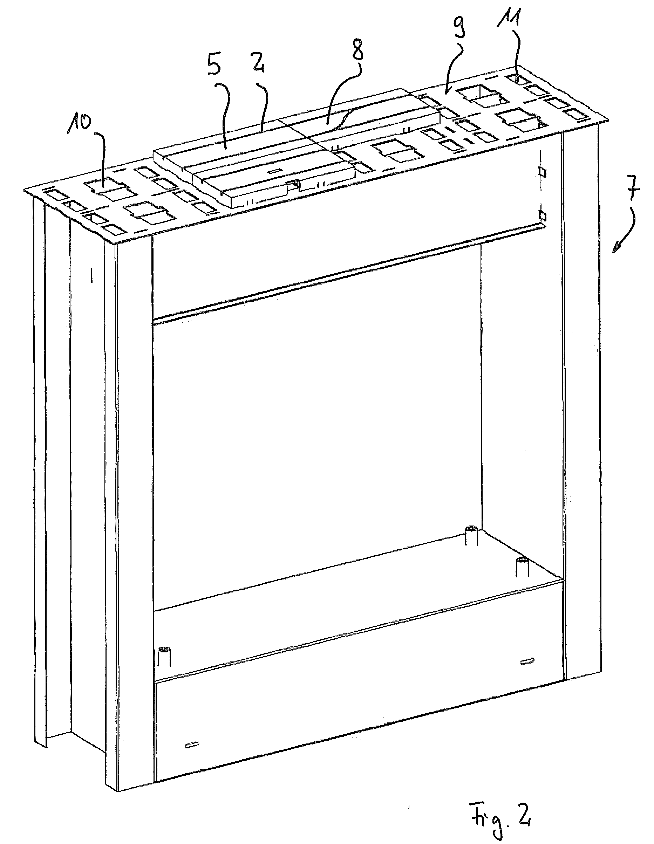

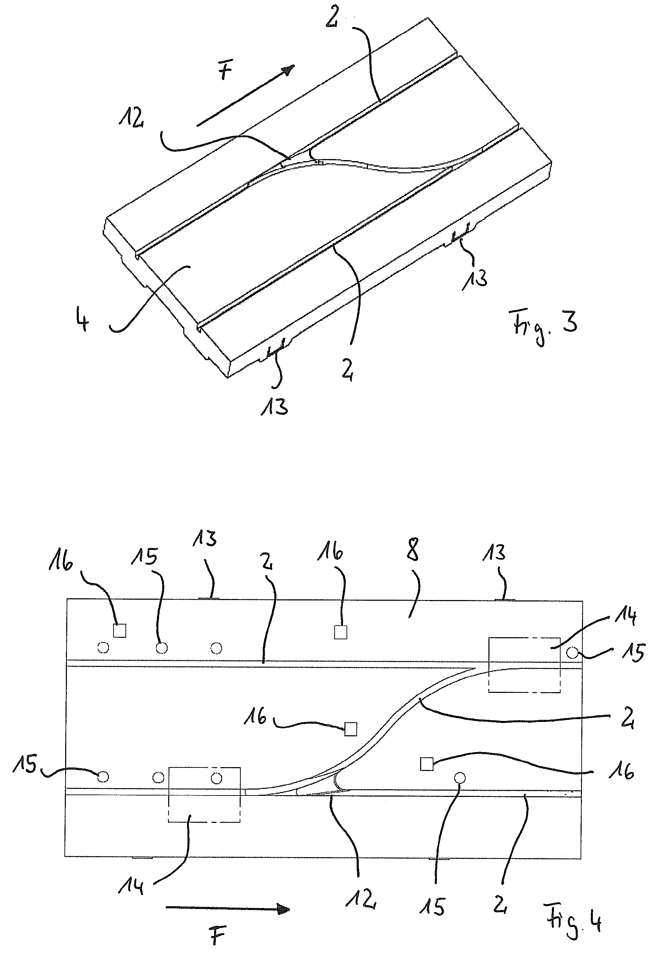

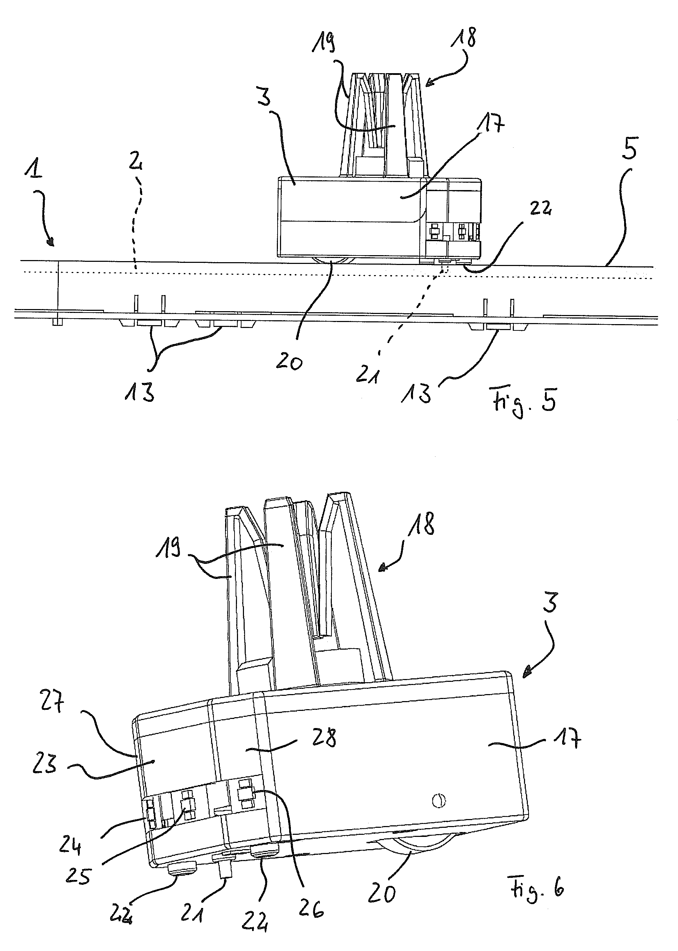

Die Führungsbahn ist, wie insbesondere in Fig. 2 gut zu erkennen ist, aus den Bahnelementen zusammengestellt, die auf einem Basiselement 7 auf dessen Oberfläche 9 angeordnet sind. In der Fig. 2 sind insgesamt drei Bahnelemente, zwei Bahnelemente 5 mit lediglich gerade verlaufenden Führungsnuten 2 und ein Bahnelement 8 mit einer Weiche dargestellt. Das Basiselement 7 weist verschieden geformte Öffnungen 10 bzw. 11 auf. Die Öffnungen 11 dienen dem Verrasten von auf die Oberfläche 9 des Basiselementes 7 aufgesetzten Bahnelementen, wozu die Bahnelemente 4, 5, 6, 8 mit entsprechend daran ausgeformten Rastelementen 13 (vgl. Figuren 3 und 5) in diese Öffnungen 11 eingreifen und dort halten. Die Öffnungen 10 dienen der Durchführung von elektrischen Versorgungs- sowie Datenleitungen zu auf der den Führungsnuten 2 gegenüberliegenden Unterseite der Bahnelemente angeordneten, nachfolgend noch näher zu beschreibenden elektrischen bzw. elektronischen Komponenten. Für den Aufbau einer Förderbahn 1 können mehrere Basiselemente 7 zusammengestellt werden zum Bilden einer ausgedehnten Basis, und es können nach Bedarf Bahnelemente 4, 5, 6 bzw. 8 zusammengestellt werden, um Förderstrecken ausbilden zu können zum Erreichen bzw. Anfahren von entlang der Förderstrecke aufgestellten Stationen, beispielsweise Messrobotern oder dgl. Dabei sind die Bahnelemente 4, 5 und 8 mit jeweils identischen Abmessungen gebildet, so dass sie modular untereinander austauschbar auf die Oberfläche 9 des Basiselementes 7 aufgesetzt und dort in den Öffnungen 1 verrastet werden können. Einerseits kann dadurch individuell und einfach eine bestimmte Bahn mit Förderstrecken nach Bedarf zusammengestellt, ggf. beispielsweise bei einer Umgestaltung des Laboraufbaus umgerüstet werden. Andererseits besteht so die Möglichkeit, beispielsweise defekte Bahnelemente einfach auszutauschen, indem das defekte Bahnelement entnommen und ein funktionierendes Bahnelement in die entstandene Lücke eingesetzt und durch Verrasten festgelegt wird. Ein solcher Austausch kann innerhalb kürzester Zeit erfolgen, es sind lediglich eventuelle Anschlüsse an das Bahnelement bei dem defekten Bahnelement zu lösen und mit dem neu einzusetzenden Bahnelement entsprechend zu verbinden. Kommt es hier also zu einem Defekt in der Bahn, so kann eine Reparatur sehr schnell vorgenommen werden, ohne dass es zu langen Stillstandszeiten der gesamten Förderbahn 1 und damit des Fördersystems kommt mit den eingangs bereits beschriebenen damit verbundenen Nachteilen.

In Fig. 3 ist in perspektivischer Darstellung ein Bahnelement 4 in vergrößerter Ansicht gezeigt. Hier sind noch einmal gut zu erkennen die Rastelemente 13 und die Führungsnuten 2, die die Förderstrecke ausbilden. Das Bahnelement 4 weist eine Weiche 12 auf. Ein Probenhalter (hier nicht gezeigt) nähert sich der Weiche in Fahrtrichtung F und wird diese je nach Weichenschaltung entweder in Geradeausfahrt, also auf der in der Fig. 3 oben gezeigten Führungsnut 2 passieren oder aber in den Abzweig überführt auf die in der Fig. 3 unten gezeichnete Führungsnut 2.

In Fig. 4 ist eine Aufsicht auf ein weiteres Bahnelement 8 gegeben, welches wiederum ein mit einer Weiche 12 ausgebildetes Bahnelement ist, diesmal in umgekehrter Bauweise hinsichtlich der möglichen Überführungsrichtung. Die Fahrtrichtung F ist wiederum in Form eines Pfeils eingezeichnet.

In dieser Figur sind die erfindungsgemäß als Besonderheit in der Förderbahn, also hier in den Bahnelementen angeordneten Signalübermittlungsmittel gezeigt, die aber auch in anderen Bahnelementen vorhanden sind. Dabei sind hier zwei verschiedene Arten von Signalübermittlungsmitteln zu erkennen, nämlich HF-RFID-Elemente 14 für eine Nahfeldkommunikation nach dem NFC-Standard sowie LEDs 15, die durch die kleinen Kreise symbolisiert sind und mittels derer durch ein gepulstes Blinken, abhängig von der Pulsdauer und Frequenz, Signale an einen diesen Streckenabschnitt überfahrenden Probenhalter übermittelt werden können, der zu diesem Zwecke entsprechende Empfangseinrichtungen aufweist. Ebenfalls in der Bahn angeordnet sind Hall-Sensoren, die lediglich dem Erkennen eines passierenden Probenhalters dienen, der zu diesem Zwecke an entsprechender den Hall-Sensoren 16 bei Überfahrt gegenüberliegender Position einen Permanentmagneten aufweist. Die Hall-Sensoren 16 sind insbesondere im Annäherungsbereich an den Abzweig vorhanden und hinter der Weiche 12. Die Anordnung der Hall-Sensoren 16 hinter der Weiche 12 dient dazu, zu detektieren, dass ein Probenhalter die Weiche 12 durchfahren hat, um die Weiche 12 für die nächste Durchfahrt freizugeben.

In Fig. 5 ist in einer Darstellung von der Seite her gezeigt, wie der selbstfahrende Probenhalter 3 auf der Förderbahn 1 sitzt. Der selbstfahrende Probenhalter 3 hat einen Basiskörper 17 und eine auf dessen Oberseite angeordnete Gefäßaufnahme 18 zur Aufnahme eines einzelnen im Wesentlichen zylinderförmigen, insbesondere röhrchenförmigen Probengefäßes (hier nicht gezeigt). Bestandteil der Gefäßaufnahme 18 sind vier um jeweils 90° versetzte Finger 19, die gegen die Außenwand des zylinderförmigen Gefäßes drücken und dieses in aufrechter Position halten.

Angetrieben zur Selbstfahrt wird der Probenhalter 3 über ein motorisch in Rotation versetztes Friktionsrad 20. In diesem Ausführungsbeispiel besitzt der Probenhalter 3 ein einziges solchen Friktionsrad, welches entlang seiner Mittelachse angeordnet ist und in Richtung dieser Achse abrollt. Das Friktionsrad 20 weist einen geeigneten Belag auf, der einen hohen Reibwert gegenüber dem Oberflächenmaterial der Förderbahn 1 hat. Auf einer in Längsrichtung des Probenhalters 3 der Position des Friktionsrades 20 gegenüberliegenden Seite desselben sind Gleitelemente 22 sowie ein Führungsstift 21 angeordnet. Der Führungsstift 21 ragt, wie in Fig. 5 zu erkennen ist, in die Führungsnut 2 hinein, ohne den Nutengrund zu berühren. Das Zusammenwirken von Führungsnut 2 und Führungsstift 21 bewirkt die Richtungsführung des selbstfahrenden Probenhalters 3 entlang der Förderstrecke. Die Gleiter 22 sind aus einem reibungsarmen Material, welches gegenüber der Oberfläche der Förderbahn 1 eine geringe Reibung aufweist. Sie sind Abstützpunkte für den Probenhalter 3; das Friktionsrad 20 schiebt den Probenhalter 3 gleitend über die Auflagepunkte der Gleitelemente 22 auf der Förderbahn 1. Das zentral an dem Probenhalter 3 angeordnete Friktionsrad 20 weist eine größere Breite auf als die Öffnungsweite der Nut 2, so dass es diese Nut 2 sicher überfahren kann, ohne in diese abzurutschen, und zugleich auch bei einem Überfahren dieser Nut noch ausreichend Kraftschluss durch Materialreibung gegenüber der Oberfläche der Förderbahn 1 aufbringt.

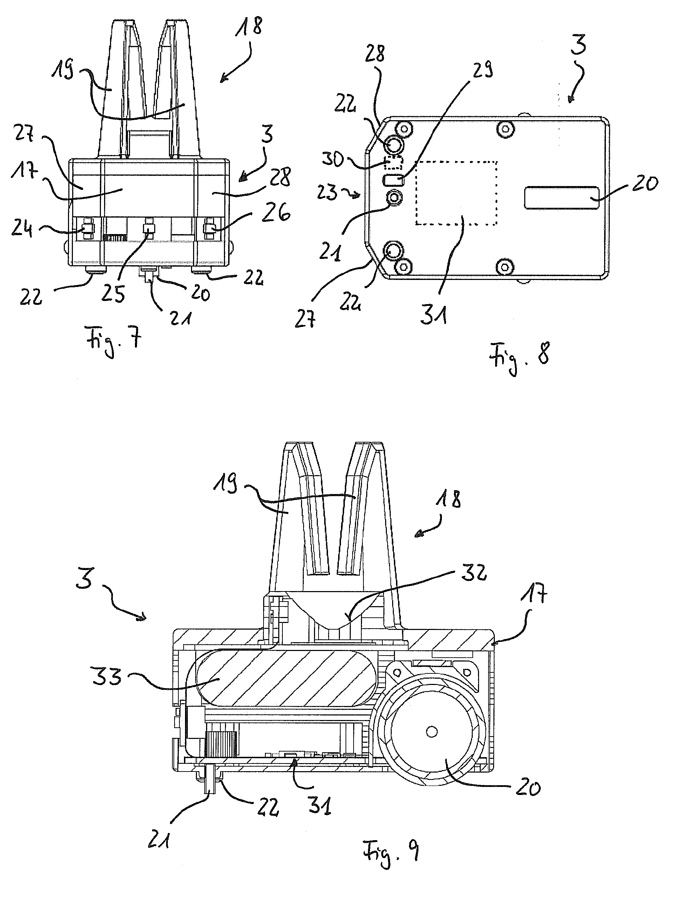

In Fig. 6 ist der Probenhalter 3 noch einmal in vergrößerter Darstellung zu erkennen. Zu erkennen ist hier insbesondere, dass an einem Vorderende 23, welches bei einer Fahrt des Probenhalters in Fahrtrichtung gesehen vorne gelegen ist, seitlich gesehen Abschrägungen 27 und 28 angeordnet sind, die gegenüber der Stirnkante in einem Winkel von ca. 30° geneigt verlaufen. In den so gebildeten drei Bereichen der geraden Frontwand und Abschrägungen 27 und 28 sind jeweils Kollisionswarnsensoren 24, 25, 26 angeordnet, die beispielsweise über optische Signale und Reflektionsmessungen Hindernisse im Bereich eines Sensorkegels erkennen und entsprechende Signale an die Motorsteuerung des Probenhalters 3 geben können. In Fig. 7 ist diese Situation noch einmal in einer Ansicht des Probenhalters 3 von vorn zu erkennen. Fig. 8 zeigt eine Ansicht des Probenhalters 3 von unten. Dort sind noch einmal die Abschrägungen 27 und 28 an der Vorderseite 23 gut zu sehen. Ferner kann hier ein bei 29 gezeigter optischer Sensor erkannt werden, der bei Durchfahren der Förderbahn die von den in Fig. 4 gezeigten LEDs 15 abgegebenen Signale erkennt und zu einer Fahr- bzw. der Motorsteuerung an Bord des Probenhalters 3 weitergibt. Dieser optische Sensor 29 bildet insoweit eine Signalempfangseinrichtung. Ferner zu erkennen ist bei 30 ein an Bord des Probenhalters angeordneter Permanentmagnet, der in seiner Position so angeordnet ist, dass er bei Überfahrt der Förderbahn 1 in vorgesehener Fahrtrichtung die Hall-Sensoren 16 (vgl. Fig. 4) überstreicht und dort Signale auslöst. Auch zu erkennen ist ein mit 31 skizzierter HF-RFID, der zur Kommunikation mit den Gegenstellen, den HF-RFIDs in der Förderbahn (vgl. Fig. 4) angeordnet ist. Diese Paarung aus HF-RFIDs 14 in der Förderbahn und HF-RFIDs 31 in den Probenhaltern 3 bildet ein weiteres Paar aus Signalübermittlungsmitteln und Signalempfangsmitteln.

In diesem Ausführungsbeispiel werden mittels der LEDs 15 Signale beinhaltend Steuerdaten für Fahrparameter an die Probenhalter 3 übermittelt, wenn diese die LEDs 15 überfahren, wobei die Probenhalter 3 diese Signale mit dem optischen Sensor 29 auslesen. Derartige Signale sind beispielsweise Steuersignale hinsichtlich der Fahrgeschwindigkeit, die der Probenträger 3 einzustellen hat. Beispielsweise kann ein Befehl zur Verringerung der Fahrgeschwindigkeit ausgegeben werden, wenn sich der Probenträger 3 auf einer in der Fig. 4 unten gezeigten Förderstrecke, also entlang der dort liegenden Führungsnut 2 in der Figur von links entlang der Fahrtrichtung der Weiche nähert und die Weiche geschaltet ist, den Probenhalter 3 in den Abzweig auf die dann oben verlaufende Führungsnut 2 zu überführen. Dieses Signal kann vermittels der in der Figur links dargestellten LEDs 15 an den Probenhalter übermittelt werden. Anstelle einer Signalübermittelung mit gepulsten oder ähnlichen LEDs, d.h. Chiffrierung der Signale durch eine einzige LED, können auch mehrere LEDs mit unterschiedlichen Wellenlängen angeordnet sein, von denen nur eine ein Lichtsignal gibt, bzw. es kann eine Multicolor-LED vorhanden sein, wobei unterschiedliche Wellenlängen der Lichtemission von dem optischen Sensor 29 wahrgenommen werde können und die verschiedenen Wellenlängen bestimmten Steuerdaten bzw. Steuerbefehlen zugeordnet sind.

Zugleich werden im Ausführungsbeispiel über die LEDs 15 an den optischen Sensor 29 auf dem Probenhalter 3 weitere Steuerdaten übertragen, die das Fahrverhalten betreffen. Dies sind insbesondere Befehle zum Einschalten von Kollisionswarnsensoren 24 bzw. 26 auf den Abschrägungen 27 bzw. 28. Wieder in dem Beispiel anhand der Fig. 4 wird bei einem Probenhalter 3, der sich entlang einer Förderstrecke auf der unten liegenden Führungsnut von links der Weiche 12 nähert und an der Weiche überführt werden soll in die in der Figur oben liegende Förderstrecke bzw. Führungsnut 2 über die LEDs 15 im Bereich vor der Weiche 12 und hin zu dem optischen Sensor 29 ein Befehl übermittelt, den auf der in Fahrtrichtung links liegenden Seite an der Abschrägung 28 angeordneten Kollisionswarnsensor 26 zu aktivieren. Der an der anderen Abschrägung 27 liegende Kollisionswarnsensor 24 bleibt deaktiviert. So kann eine Kollisionsüberwachung im Bereich des Abzweiges hinsichtlich sich möglicherweise dort von der Seite nähernder anderer Probenhalter 3 durchgeführt und bei Feststellen eines dort befindlichen Probenhalters ein Stoppbefehl an den Antriebsmotor gegeben werden. In gleichem Maße wird für einen sich auf der oberen Führungsnut 2 in Fahrtrichtung von links nähernden Probenhalter 3 durch die dort angeordneten LEDs 15 ein Befehl ausgegeben, den in Fahrtrichtung rechts auf der Abschrägung 27 gelegenen Kollisionswarnsensor 24 zu aktivieren, um eine Überwachung in Richtung des eingehenden Abzweiges vornehmen zu können. Jeweils nach einer Weichendurchfahrt bzw. nach Passieren des Abzweiges erfolgt über die dort gelagerte weitere LED 15 die Übermittlung eines Steuersignals zur Deaktivierung des jeweils aktivierten Kollisionswarnsensors. Bei normaler Geradeausfahrt werden die an den Abschrägungen 27 und 28 befindlichen Kollisionswarnsensoren deaktiviert, da ansonsten die Warnnehmung eines in einer Parallelfarbahn befindlichen Probenhalters 3, zu dem es keine Kollisionsmöglichkeit gibt, zu einer grundlosen Warnausgabe und einem Halt des selbstfahrenden Probenhalters 3 führen würde.

Durch Nahfeldkommunikation der HF-RFIDs 14 und 31 nach dem NFC-Standard beim Passieren der selbstfahrenden Probenhalter 3 werden zwischen diesen Elementen Daten ausgetauscht hinsichtlich der Bestückung des jeweiligen Probenhalters 3 mit einer bestimmten Probe, hinsichtlich eines Zustandes des selbstfahrenden Probenhalters 3 und dgl. So kann beispielsweise der selbstfahrende Probenhalter 3 an diesen Stellen Daten übermitteln hinsichtlich eines Ladezustandes seines Akkumulators, so dass eine zentrale Steuerung, mit der die einzelnen Elemente Hall-Sensoren 16, LEDs 15 und HF-RFIDs 14 verbunden sind, den mit schwachem Ladezustand seines Akkumulators versehenen Probenhalter 3 aussortieren und zu einer Ladestation verfahren kann. Ein Austausch von Daten über die auf dem Probenhalter 3 befindliche Probe an neuralgischen Punkten in der Förderbahn hilft, die Auswahl des richtigen Probenhalters zur Zuführung zu einem Analysepunkt zu verifizieren und vorzunehmen.

Es versteht sich von selbst, dass die Elemente LEDs 15, Hall-Sensoren 16 und HF-RFIDs 14 nicht allein in einem wie in Fig. 4 gezeigten Bahnelement 8 angeordnet sind, sondern in gleicher bzw. hinsichtlich der Relevanz eines Datenaustausches bzw. eine Datenübertragung angepasster Weise auch in anderen Bahnelementen, nicht nur mit Weichen, sondern auch mit Geradeausfahrt oder aber im Bereich von Wendebögen.

In Fig. 9 ist noch einmal ein Längsschnitt durch den Probenhalter 3 gezeigt, wobei hier noch einmal der Energiespeicher in Form eines Akkumulators 33 zu erkennen ist, von dem der hier nicht dargestellte Antriebsmotor wie auch die verschiedenen elektrischen bzw. elektronischen Komponenten an Bord des Probenhalters 3 ihre Energie beziehen. Zu erkennen ist ferner ein schalenartig geformter Grund 32 der Gefäßaufnahme 18, auf welchem bei eingesetztem Probengefäß dessen Boden ruht.

Aus der obigen Darstellung des Ausführungsbeispiels ist noch einmal der Vorteil des erfindungsgemäßen Fördersystems deutlich geworden, der sich aus der Anordnung von Signalübertragungsmitteln an neuralgischen Positionen in der Förderbahn ergibt, welche Anordnung eine einfache und dezentral aufgebaute und dennoch funktionierende Steuerung der selbstfahrenden Probenhalter erlaubt.

### Bezugszeichenliste

- 1: Förderbahn
- 2: Führungsnut
- 3: Probenhalter
- 4: Bahnelement
- 5: Bahnelement
- 6: Bahnelement
- 7: Basiselement
- 8: Bahnelement
- 9: Oberfläche
- 10: Öffnung
- 11: Öffnung
- 12: Weiche
- 13: Rastelement
- 14: HF-RFID
- 15: LED
- 16: Hall-Sensor
- 17: Basiskörper
- 18: Gefäßaufnahme
- 19: Finger
- 20: Friktionsrad
- 21: Führungsstift
- 22: Gleitelement
- 23: Vorderseite
- 24: Kollisionswarnsensor
- 25: Kollisionswarnsensor
- 26: Kollisionswarnsensor
- 27: Abschrägung
- 28: Abschrägung
- 29: optischer Sensor
- 30: Magnet
- 31: HF-RFID
- 32: Grund
- 33: Akkumulator
- F: Fahrtrichtung

## Patentansprüche

1. Fördersystem für Materialproben, insbesondere medizinische Proben, mit einer wenigstens eine Förderstrecke ausbildenden Förderbahn (1) und mit einer Vielzahl von entlang der Förderstrecke verbringbaren, mit einstellbaren Fahrparametern selbstfahrenden, jeweils zur Aufnahme eines Probengefäßes ausgebildeten Probenhaltern (3), welche Probenhalter (3) jeweils einen Antriebsmotor, einen Energiespeicher (33) zum Versorgen des Antriebsmotors mit Antriebsenergie und wenigstens ein von dem Antriebsmotor antreibbares Friktionsrad (20) zum Übertragen einer Antriebskraft auf die Förderbahn (1) aufweisen und mit einer Steuerung zum Steuern der Fahrten der selbstfahrendenden Probenhalter (3), **gekennzeichnet durch** entlang der Förderstrecke an vorbestimmten Positionen in der Förderbahn (1) angeordnete Signalübertragungsmittel (14, 15), die zur Ausbildung einer Nahfeld-Übermittlungsstrecke mit in den Probenhaltern (3) angeordneten Signalempfangsmitteln (29, 31) eingerichtet sind, wobei die Signalübertragungsmittel (14, 15) mit der Steuerung verbunden und zur Übermittlung von die Einstellung der Fahrparameter betreffenden Steuerdaten über die Nahfeld-Übermittlungsstrecke an die selbstfahrenden Probenhalter (3) eingerichtet sind.

2. Fördersystem nach Anspruch 1, **dadurch gekennzeichnet, dass** die Signalübertragungsmittel (14, 15) zum Übermitteln von Steuerdaten hinsichtlich einer von dem Probenhalter (3) einzustellenden Fahrgeschwindigkeit eingerichtet sind.

3. Fördersystem nach einem der vorhergehenden Ansprüche, **dadurch gekennzeichnet, dass** die Signalübertragungsmittel (14, 15) an vorbestimmten Punkten der Föderbahn (1), insbesondere vor bzw. eingangs von Geradenabschnitten, vor Kurven und im Bereich von Weichen (12) angeordnet sind.

4. Fördersystem nach einem der vorhergehenden Ansprüche, **gekennzeichnet durch** eine Lichtstrecke als Nahfeld-Übermittlungsstrecke mit einem Laser oder einer LED (15) als Signalübertragungsmittel und einem Lichtsensor (29) als Signalempfangsmittel.

5. Fördersystem nach einem der vorhergehenden Ansprüche, **gekennzeichnet durch** eine Datenübermittlungsstrecke mit HF-RFID Elementen (14, 31), insbesondere nach dem NFC Standard, als Nahfeld-Übermittlungsstrecke.

6. Fördersystem nach einem der vorhergehenden Ansprüche, **gekennzeichnet, durch** in der Förderbahn (1) angeordnete Probenhalter-Erkennungssensoren (16) zum Feststellen eines im Erkennungsbereich eines solchen Probenhalter-Erkennungssensors (16) befindlichen Probenhalters (3).

7. Fördersystem nach einem der vorhergehenden Ansprüche, **dadurch gekennzeichnet, dass** die Förderbahn (1) Weichen (12) aufweist und dass in Durchfahrtsrichtung vor einer Weiche (12) in der Förderbahn (1) Sensoren (14) zum Erkennen eines individuellen Probenhalters (3) angeordnet sind.

8. Fördersystem nach einem der vorhergehenden Ansprüche, **dadurch gekennzeichnet, dass** die Förderbahn (1) aus auf einer Basis (7) angeordneten, mit der Basis (7) lösbar verbundenen modularen Bahnelementen (4, 5, 6, 8) gebildet ist, wobei die modularen Bahnelemente (4, 5, 6, 8) Förderstreckenstrukturen und ggf. elektronische Komponenten mit Signalübertragungsmitteln (14, 15) und/oder Sensoren (16) sowie zugehöriger Ansteuerelektronik aufweisen.

9. Fördersystem nach Anspruch 8, **dadurch gekennzeichnet**, das die modularen Bahnelemente (4, 5, 6, 8) Rastmittel (13) aufweisen, mittels derer sie lösbar auf der Basis (7) verrastbar, insbesondere auf diese aufklipsbar sind.

10. Fördersystem nach einem der vorhergehenden Ansprüche, **dadurch gekennzeichnet, dass** die Probenhalter (3) Kollisionswarnsensoren (24, 25, 26) aufweisen, die mit dem Antriebsmotor in der Weise verbunden sind, dass sie diesen bei einem festgestelltem Hindernis stoppen bzw. auskuppeln.

11. Fördersystem nach Anspruch 10, **gekennzeichnet durch** in der Förderbahn (1) angeordnete Signalgeber (15) als Signalübertragungsmittel, denen entsprechende Signalempfänger (29) als Signalempfangsmittel auf den Probenhaltern (3) zugeordnet sind, die zum Aktivieren bzw. Deaktivieren wenigstens eines der Kollisionswarnsensoren (24, 25, 26) bei von den Signalgebern (15) empfangenen Signalen eingerichtet sind.

12. Fördersystem nach einem der vorhergehenden Ansprüche, **dadurch gekennzeichnet, dass** in der Förderbahn (1) Förderstrecken durch quer zur Oberfläche der Förderbahn (1) verlaufende Führungsnuten (2) vorgegeben sind, und dass die Probenhalter (3) auf ihren der Förderbahn (1) zugewandten Unterseiten jeweils einen Führungsstift (21) aufweisen zum Eingreifen in die Führungsnuten (2).

13. Verfahren zum Betreiben eines Fördersystem für Materialproben, insbesondere medizinische Proben, mit einer wenigstens eine Förderstrecke ausbildenden Förderbahn und mit einer Vielzahl von entlang der Förderstrecke verbringbaren, mit einstellbaren Fahrparametern selbstfahrenden, jeweils zur Aufnahme eines Probengefäßes ausgebildeten Probenhaltern und mit einer Steuerung zum Steuern der Fahrten der selbstfahrendenden Probenhalter, **dadurch gekennzeichnet, dass** den selbstfahrenden Probenhalter mittels entlang der Förderstrecke an vorbestimmten Positionen in der Förderbahn angeordneten Signalübertragungsmitteln, die zur Ausbildung einer Nahfeld-Übermittlungsstrecke mit in den Probenhaltern angeordneten Signalempfangsmitteln eingerichtet und mit der Steuerung verbunden sind, die Einstellung der Fahrparameter betreffende Steuerdaten über die Nahfeld-Übermittlungsstrecke übermittelt werden.

## Claims

1. A conveying system for material samples, in particular medical samples, with at least one conveyor track (1) forming a conveying section and with a plurality of sample holders (3) designed respectively to hold a sample vessel, which sample holders are self-propelled with adjustable driving parameters, can be displaced along the conveying section and comprise respectively a drive motor, an energy accumulator (33) for supplying the drive motor with driving energy and at least one friction wheel (20), drivable by the drive motor, for transmitting a driving force to the conveyor track (1), and with a control unit for controlling the trajectories of the self-propelled sample holders (3), **characterised by** signal transmission means (14, 15) arranged along the conveying section at preset positions in the conveyor track (1), which are set up to build a near-field transmission line with the signal transmission means (29, 31) arranged in the sample holders (3), wherein the signal transmission means (14, 15) are connected to the control unit and set up for transmitting control data regarding the configuration of the driving parameters, via the near-field transmission line, to the self-propelled sample holders (3).

2. The conveying system of claim 1, **characterised in that** the signal transmission means (14, 15) are set up for transmitting control data regarding a driving speed to be adjusted by the sample holder (3).

3. The conveying system according to any of the preceding claims, **characterised in that** the signal transmission means (14, 15) are arranged at preset points of the conveyor track (1), in particular before or at the entrance to straight sections, bevore curves or in the area of turnouts (12).

4. The conveying system according to any of the preceding claims, **characterised by** a light path as a near-field transmission line with a laser or a LED (15) as a signal transmission means and a light sensor (29) as a signal receiving means.

5. The conveying system according to any of the preceding claims, **characterised by** a data transmission line with HF-RFID elements (14, 31), in particular complying with the NFC standard, as a near-field transmission line.

6. The conveying system according to any of the preceding claims, **characterised by** sample holder detection sensors (16) provided in the conveyor track (1) for recognising a sample holder (3) situated in the detection zone of such a sample holder detection sensor (16).

7. The conveying system according to any of the preceding claims, **characterised in that** the conveyor track (1) comprises turnouts (12) and that in the direction of passage before a turnout (12) in the conveyor track (1), sensors (14) are provided for detecting an individual sample holder (3).

8. The conveying system according to any of the preceding claims, **characterised in that** the conveyor track (1) is formed of modular track members (4, 5, 6, 8) connected releasably with the base (7) and arranged on said base (7), wherein the modular track members (4, 5, 6, 8) has conveying path structures and possibly electronic components with signal transmission means (14, 15) and/or sensors (16) as well as corresponding control electronic circuitry.

9. The conveying system of claim 8, **characterised in that** the modular track members (4, 5, 6, 8) have catch means (13), whereby they can be latched releasably on the base (7), in particular they can be clipped thereon.

10. The conveying system according to any of the preceding claims, **characterised in that** the sample holders (3) have collision warning sensors (24, 25, 26), which are connected to the drive motor so as to stop or decouple said motor when an obstacle has been detected.

11. The conveying system of claim 10, **characterised by** signal transducers (15) arranged in the conveyor track (1) as signal transmission means, which are associated corresponding signal receivers (29) as signal receiving means on the sample holders (3), which are set up for actuating or de-actuating at least one of the collision warning sensors (24, 25, 26) when receiving signals from the signal transducers (15).

12. The conveying system according to any of the preceding claims, **characterised in that** conveying sections are provided in the conveyor track (1) through guiding slots (2) extending crosswise to the surface of the conveyor track (1), and that the sample holders (3) have respectively a guide pin (21) on their lower sides facing the conveyor track (1) to engage the guiding slots (2).

13. A method for operating a conveying system for material samples, in particular medical samples, with at least one conveyor track forming a conveying section and with a plurality of sample holders designed respectively to hold a sample vessel, self-propelled with adjustable driving parameters, sample holders which can be displaced along the conveying section, and with a control unit for controlling the trajectories of the self-propelled sample holders,
**characterised in that** the self-propelled sample holders, using signal transmission means arranged along the conveying section at preset position in the conveyor track, which are set up to build a near-field transmission line with the signal transmission means arranged in the sample holders and are connected to the control unit, receive the control data regarding the adjustment of the driving parameters via the near-field transmission line.

## Revendications

1. Système de convoyage pour des échantillons de matériaux, en particulier les échantillons médicaux, avec au moins une piste de convoyage (1) formant une section de convoyage et avec une pluralité de portes-échantillons (3) conçus respectivement pour contenir un flacon d'échantillon, lesquels portes-échantillons ont autopropulsés avec des paramètres de conduite réglables, peuvent être déplacées le long de la section de transport et comprennent respectivement d'un moteur d'entraînement, un accumulateur d'énergie (33) pour alimenter le moteur d'entraînement en énergie et au moins une roue de friction (20), pilotable par le moteur d'entraînement, pour transmettre une force motrice à la piste de convoyage (1), et avec une unité de commande pour contrôler les trajectoires des portes-échantillons autopropulsés (3), **caractérisé par** des moyens de transmission de signaux (14, 15) disposés le long de la section de convoyage à des positions prédéfinies dans la piste de convoyage (1), qui sont configurés pour former une ligne de transmission en champ proche avec les moyen de transmission de signaux (29, 31) prévus dans les portes-échantillons (3), où les moyens de transmission des signaux (14, 15) sont connectés à l'unité de commande et paramétrés pour transmettre des données de commande concernant la configuration des paramètres de conduite, via la ligne de transmission en champ proche, aux portes-échantillons autopropulsés (3).

2. Système de convoyage selon la revendication 1, **caractérisé en ce que** les moyens de transmission des signaux (14, 15) sont configurés pour transmettre des données de commande concernant une vitesse de conduite à régler par le porte-échantillon (3).

3. Système de convoyage selon l'une quelconque des revendications précédentes, **caractérisé en ce que** les moyens de transmission des signaux (14, 15) sont disposés à des points prédéfinis de la piste de convoyage (1), en particulier devant ou à l'entrée de sections rectilignes, devant des courbes ou dans la zone d'aiguillages (12).

4. Système de convoyage selon l'une quelconque des revendications précédentes, **caractérisé par** un chemin lumineux comme ligne de transmission en champ proche avec un laser ou une DEL (15) comme moyens de transmission des signaux et un capteur de lumière (29) comme moyens de réception des signaux.

5. Système de convoyage selon l'une quelconque des revendications précédentes, **caractérisé par** une ligne de transmission de données avec des éléments RFID HF (14, 31), en particulier conforme à la norme NFC, comme ligne de transmission en champ proche.

6. Système de convoyage selon l'une quelconque des revendications précédentes, **caractérisé par** les capteurs de détection de portes-échantillons (16) prévus dans la piste de convoyage (1) pour reconnaître un porte-échantillon (3) situé dans la zone de détection d'un tel capteur de détection de portes-échantillons (16).

7. Système de convoyage selon l'une quelconque des revendications précédentes, **caractérisé en ce que** la piste de convoyage (1) comprend des aiguillages (12) et que dans le sens de passage avant un aiguillage (12) dans la piste de convoyage (1), des capteurs (14) sont prévus pour détecter un porte-échantillon individuel (3).

8. Système de convoyage selon l'une quelconque des revendications précédentes, **caractérisé en ce que** la piste de convoyage (1) est constituée d'éléments de piste modulaires (4, 5, 6, 8) connectés de manière libérable avec la base (7) et agencés sur ladite base (7), où les éléments de piste modulaires (4, 5, 6, 8) comportant des structures de circuit de convoyage et éventuellement des composants électronique avec des moyens de transmission des signaux (14, 15) et/ou capteurs (16) ainsi que des circuits électroniques de commande correspondants.

9. Système de convoyage selon la revendication 8, **caractérisé en ce que** les éléments de piste modulaires (4, 5, 6, 8) ont des moyens d'encliquetage (13), où ils peuvent être verrouillé de manière libérable sur la base (7), en particulier, ils peuvent clipsés sur celle-ci.

10. Système de convoyage selon l'une quelconque des revendications précédentes, **caractérisé en ce que** les portes-échantillons (3) ont des capteurs d'avertissement de collision (24, 25, 26), qui sont connectés au moteur d'entraînement afin d'arrêter ou de découpler ledit moteur en cas de détection d'un obstacle.

11. Système de convoyage selon la revendication 10, **caractérisé par** des transducteurs de signal (15) agencés dans la piste de convoyage (1) comme moyens de transmission des signaux, auxquels sont associés des récepteurs de signaux correspondants (29) comme moyens de réception des signaux sur les portes-échantillons (3), qui sont configurés pour activer ou désactiver au moins l'un des capteurs d'avertissement de collision (24, 25, 26) lors de la réception de signaux à partir des transducteurs de signaux (15).

12. Système de convoyage selon l'une quelconque des revendications précédentes, **caractérisé en ce que** des sections de convoyage sont prévues dans la piste de convoyage (1) à travers des fentes de guidage (2) qui s'étendent transversalement à la surface de la piste de convoyage (1), et que les portes-échantillons (3) ont respectivement une broche de guidage (21) sur leurs côtés inférieures faisant face à la piste de convoyage (1) pour s'engager dans les fentes de guidage (2).

13. Procédé d'exploitation d'un système de convoyage pour échantillons de matériaux, en particulier les échantillons médicaux, avec au moins une piste de convoyage formant une section de convoyage et avec une pluralité de portes-échantillons conçus respectivement pour contenir un flacon d'échantillon, lesquels portes-échantillons ont autopropulsés avec des paramètres de conduite réglables, qui peuvent être déplacées le long de la section de convoyage, et avec une unité de commande pour contrôler les trajectoires des portes-échantillons autopropulsés,
**caractérisé en ce que** les portes-échantillons autopropulsés, à l'aide de moyens de transmission des signaux agencés le long de la section de convoyage à la position prédéfinie dans la piste de convoyage, qui sont configurés pour construire une ligne de transmission en champ proche avec les moyens de transmission des signaux agencés dans les portes-échantillons et sont connectés à l'unité de commande, recevoir les données de commande concernant l'ajustement des paramètres de conduite par l'intermédiaire de la ligne de transmission en champ proche.
